# EUROPEAN PATENT APPLICATION

(11) **EP 4 203 091 A1**
(43) Date of publication of application: **28.06.2023**
(21) Application number: 21858142.9
(22) Date of filing: 30.07.2021
(51) Int. Cl.: H01M 4/13, H01M 10/0587, C09J 7/38, H01M 50/531, H01M 50/595

(54) **NON-AQUEOUS ELECTROLYTE SECONDARY BATTERY**

(30) Priority: 18.08.2020 JP 2020138005
(71) Applicant: SANYO Electric Co., Ltd., Daito-shi Osaka 574-8534 (JP)
(72) Inventor: FURUTA Yohei, Osaka-shi, Osaka 540-6207 (JP)
(74) Representative: Novagraaf International SA
(86) International application number: PCT/JP2021/028237
(87) International publication number: WO 2022/038994

(57) **Abstract**

The purpose of the present disclosure is to provide a non-aqueous electrolyte secondary battery that can suppress damage to an electrode body in the vicinity of an end of an insulation tape due to repetition of charging and discharging. A non-aqueous electrolyte secondary battery (10) is characterized by comprising: an exterior body (15); a wound-type electrode body (14) which is housed in the exterior body (15) and in which a positive electrode (11) and a negative electrode (12) are wound with a separator (13) interposed therebetween; and an insulation tape stuck to the electrode body (14). The non-aqueous electrolyte secondary battery is also characterized in that the insulation tape has a base material layer and an adhesive layer that is provided on a main surface of the base material layer, and a side surface of the base material layer is non-vertically inclined with respect to the main surface.

## Description

### TECHNICAL FIELD

The present disclosure relates to a non-aqueous electrolyte secondary battery.

### BACKGROUND

Conventionally, non-aqueous electrolyte secondary batteries are widely used in which an exterior housing body houses a wound electrode assembly including a positive electrode and a negative electrode that are wound with a separator interposed therebetween.

Patent Literature 1 and Patent Literature 2 disclose an insulating tape to be attached to an electrode assembly so as to fix a winding end of the electrode assembly in order not to loosen the winding of the wound electrode assembly.

Patent Literature 3 to Patent Literature 5 disclose an insulating tape to be attached to a positive electrode, included in an electrode assembly, so as to cover a positive electrode lead connected to the positive electrode in order to improve the insulation property between the positive electrode lead and a negative electrode.

### CITATION LIST

### PATENT LITERATURE

Patent Literature 1: JP 2009-199974 A
Patent Literature 2: JP 2005-216754 A
Patent Literature 3: JP 2014-89856 A
Patent Literature 4: WO 2017/038010 A
Patent Literature 5: JP 2017-152372 A

### SUMMARY

### TECHNICAL PROBLEM

If the non-aqueous electrolyte secondary battery is repeatedly charged and discharged and thus the electrode assembly repeatedly expands and contracts, the electrode assembly repeatedly receives a pressure from the exterior housing body. If the electrode assembly repeatedly receives a pressure from the exterior housing body, a stress is applied to the insulating tape attached to the electrode assembly, and thus the electrode assembly may damage due to unevenness at an end of the insulating tape. Such electrode assembly damage may lead to deterioration of reliability and safety of the battery.

Therefore, an object of the present disclosure is to provide a non-aqueous electrolyte secondary battery in which electrode assembly damage can be suppressed that is caused in the vicinity of an end of an insulating tape by repeated charging and discharging.

### SOLUTION TO PROBLEM

A non-aqueous electrolyte secondary battery of an aspect of the present disclosure includes an exterior housing body, a wound electrode assembly housed in the exterior housing body and including a positive electrode, a negative electrode, a separator in which the positive electrode and the negative electrode are wound with the separator interposed between the positive electrode and the negative electrode, and an insulating tape attached to the wound electrode assembly, and the insulating tape includes a base material layer and an adhesive layer provided on a main surface of the base material layer, and the base material layer has a side surface that is not vertical and is inclined with respect to the main surface.

### ADVANTAGEOUS EFFECTS OF INVENTION

According to the non-aqueous electrolyte secondary battery according to the present disclosure, electrode assembly damage can be suppressed that is caused in the vicinity of an end of the insulating tape by repeated charging and discharging.

### BRIEF DESCRIPTION OF DRAWINGS

FIG. 1 is a sectional view of a non-aqueous electrolyte secondary battery of an example of an embodiment.
FIG. 2 is a perspective view of the electrode assembly illustrated in FIG. 1.
FIG. 3 is a sectional view taken along the line L1-L1 in FIG. 2.
FIG. 4 is a partial top view of a positive electrode at a position where a positive electrode tab is attached as observed from one main surface side.
FIG. 5 is a sectional view taken along the line L1-L1 in FIG. 4.
FIG. 6 is a partial top view of a winding start of a positive electrode as observed from one main surface side.
FIG. 7 is a sectional view taken along the line L1-L1 in FIG. 6.
FIG. 8 is a sectional view illustrating an example of a configuration of an insulating tape used in the present embodiment.
FIG. 9 is a sectional view illustrating another example of an insulating tape used in the present embodiment.

### DESCRIPTION OF EMBODIMENTS

Hereinafter, an example of an embodiment of the non-aqueous electrolyte secondary battery according to the present disclosure will be described with reference to the drawings. In the following description, specific shapes, materials, numerical values, directions, and the like are examples for easy understanding of the present disclosure, and can be appropriately changed in accordance with specifications of the non-aqueous electrolyte secondary battery. In a case where a plurality of embodiments and modifications are included in the following description, it is assumed from the beginning that the characterizing portions of the embodiments and the modifications are appropriately combined and used.

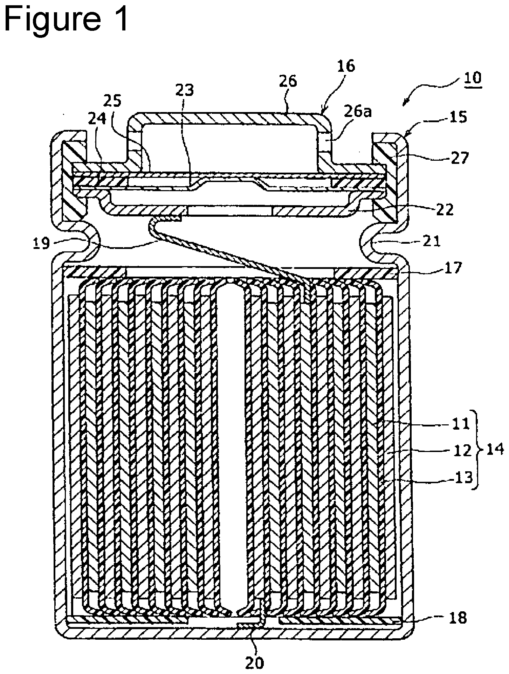

FIG. 1 is a sectional view of a non-aqueous electrolyte secondary battery of an example of an embodiment. A non-aqueous electrolyte secondary battery 10 illustrated in FIG. 1 includes an electrode assembly 14, a non-aqueous electrolyte (not illustrated), insulating plates 17 and 18 disposed above and below the electrode assembly 14, an exterior housing body 15 housing these members, and a sealing assembly 16 sealing an opening of the exterior housing body 15. The electrode assembly 14 has a winding structure formed by winding a positive electrode 11 and a negative electrode 12 with a separator 13 interposed therebetween. The electrode assembly 14 illustrated in FIG. 1 has a cylindrical shape, but may have another shape such as a flat shape.

The exterior housing body 15 is, for example, a bottomed cylindrical metallic exterior housing can. The exterior housing body 15 may also have a square shape. A gasket 27 is provided between the exterior housing body 15 and the sealing assembly 16 to ensure the sealability inside the battery. The exterior housing body 15 has a grooved part 21 in which, for example, a part of the side surface part of the exterior housing body 15 protrudes inward to support the sealing assembly 16. The grooved part 21 is preferably formed in an annular shape along the circumferential direction of the exterior housing body 15, and supports the sealing assembly 16 via the gasket 27 on the upper surface of the grooved part 21.

The sealing assembly 16 includes a filter 22, a lower vent member 23, an insulating member 24, an upper vent member 25, and a cap 26 that are stacked in this order from the electrode assembly 14 side. Each member included in the sealing assembly 16 has, for example, a disk shape or a ring shape, and the members excluding the insulating member 24 are electrically connected to each other. The lower vent member 23 and the upper vent member 25 are connected to each other at their central parts, and the insulating member 24 is interposed between the circumferential parts of the lower vent member 23 and the upper vent member 25. When the internal pressure of the battery increases due to heat generation caused by an internal short circuit or the like, for example, the lower vent member 23 breaks, and thus the upper vent member 25 expands toward the cap 26 side and separates from the lower vent member 23 to cut off the electrical connection between the lower vent member 23 and the upper vent member 25. When the internal pressure further increases, the upper vent member 25 breaks, and gas is discharged from an opening 26a of the cap 26.

In the non-aqueous electrolyte secondary battery 10 illustrated in FIG. 1, a positive electrode tab 19 is attached to the positive electrode 11. The positive electrode tab 19 attached to the positive electrode 11 is passed through a through hole of the insulating plate 17 and welded to the lower surface of the filter 22, which is the bottom plate of the sealing assembly 16. Thus, the cap 26, which is the top plate of the sealing assembly 16, electrically connected to the filter 22 serves as a positive electrode terminal. Meanwhile, a negative electrode tab 20 is attached to the negative electrode 12. The negative electrode tab 20 attached to the negative electrode 12 is passed through a through hole of the insulating plate 18 and welded to the inner surface of the bottom of the exterior housing body 15. Thus, the exterior housing body 15 serves as a negative electrode terminal.

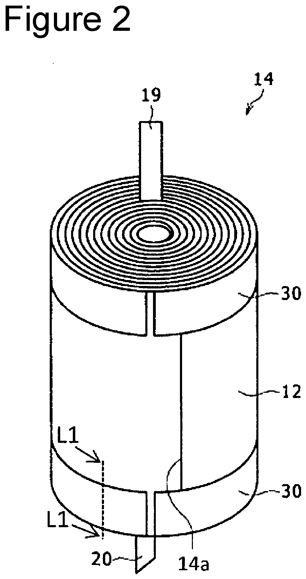

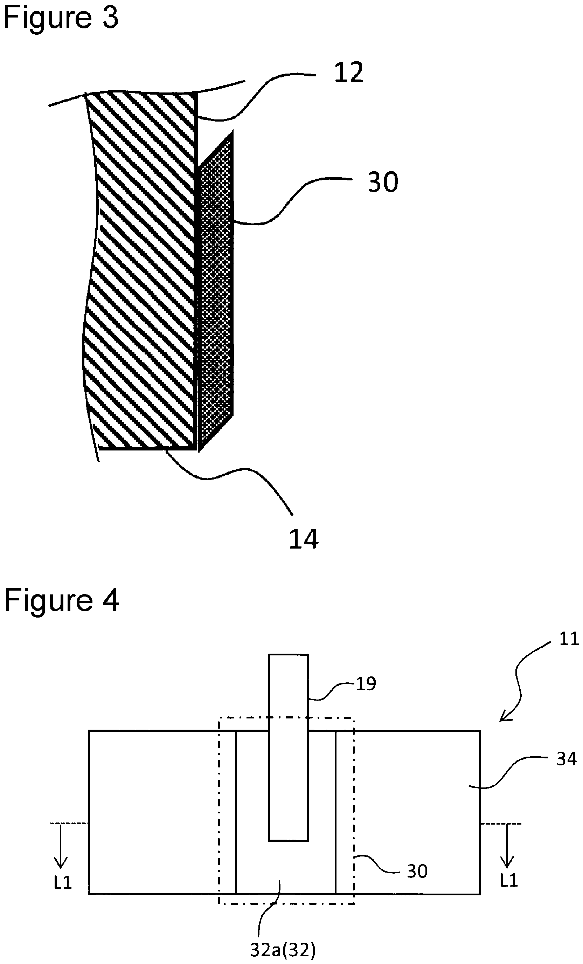

FIG. 2 is a perspective view of the electrode assembly illustrated in FIG. 1. FIG. 3 is a sectional view taken along the line L1-L1 in FIG. 2. As described above, the electrode assembly 14 has a winding structure formed by winding the positive electrode 11 and the negative electrode 12 spirally with the separator 13 interposed therebetween. All of the positive electrode 11, the negative electrode 12, and the separator 13 are formed into a band shape, and spirally wound around a winding core disposed along a winding axis, and thus alternatively stacked in a radial direction of the electrode assembly 14. In the electrode assembly 14 illustrated in FIG. 2, the positive electrode 11, the negative electrode 12, and the separator 13 are wound so that the negative electrode 12 is the outermost peripheral surface of the electrode assembly 14. In the electrode assembly 14, the longitudinal direction of the positive electrode 11 and the negative electrode 12 is the winding direction, and the band width direction of the positive electrode 11 and the negative electrode 12 is the axial direction.

As illustrated in FIGs. 2 and 3, an insulating tape 30 is attached to the outermost peripheral surface of the electrode assembly 14 so as to fix a winding end 14a of the electrode assembly 14 to the electrode assembly 14. The winding end 14a of the electrode assembly 14 illustrated in FIG. 2 is the winding end of the negative electrode 12, which is the outermost peripheral surface of the electrode assembly 14. Therefore, it can also be said that the insulating tape 30 is attached to the outermost peripheral surface of the electrode assembly 14 so as to fix the winding end of the negative electrode 12 to the electrode assembly 14. However, the outermost peripheral surface and the winding end 14a of the electrode assembly 14 are not limited to those of the negative electrode 12, and may be those of the separator 13 or the positive electrode 11. Even in such a case, the insulating tape 30 may be similarly applied. In any case, the insulating tape 30 is attached to the outermost peripheral surface of the electrode assembly 14 so as to fix the winding end 14a of the electrode assembly 14 to the electrode assembly 14, thus suppressing loosening of the winding of the wound electrode assembly 14.

The position and the number of the insulating tapes 30 are not particularly limited as long as the winding end 14a can be fixed. For example, one insulating tape 30 may be provided at each end in the axial direction of the electrode assembly 14 as illustrated in FIG. 2, or one insulating tape 30 may be provided at any one end in the axial direction of the electrode assembly 14.

The length of the insulating tape 30 is preferably close to the circumferential length of the outermost peripheral surface of the electrode assembly 14 (the length of one circumference), and may be shorter than the length of the outermost periphery of the electrode assembly 14 so that one end and the other end in the longitudinal direction do not overlap each other as illustrated in FIG. 2.

The width of the insulating tape 30 is preferably greater than or equal to 10% and less than or equal to 40% of the height of the electrode assembly 14. The width of the insulating tape 30 is, for example, greater than or equal to 3 mm and less than or equal to 30 mm, and may be greater than or equal to 5 mm and less than or equal to 15 mm.

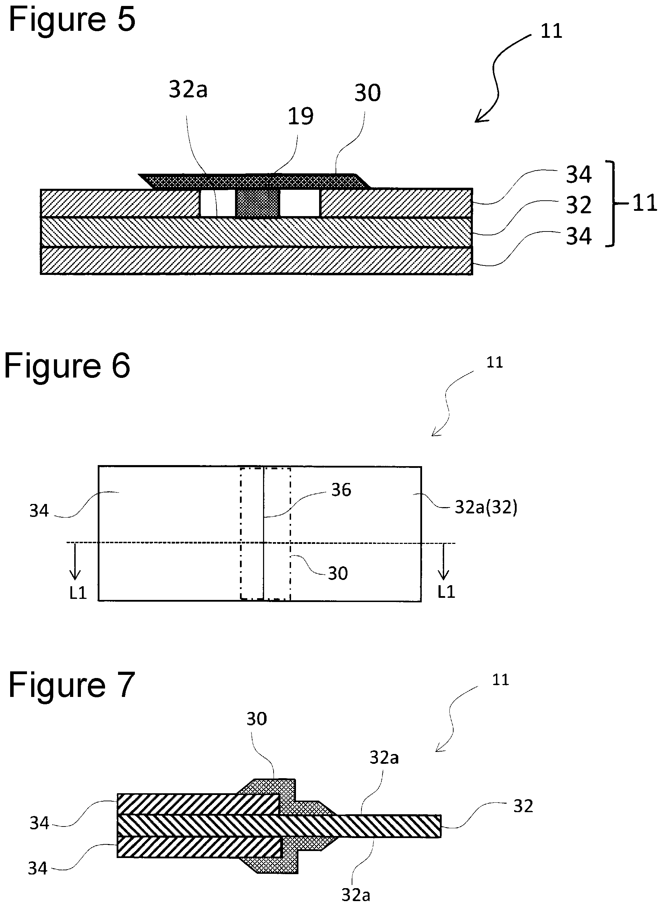

FIG. 4 is a partial top view of a positive electrode at a position where a positive electrode tab is attached as observed from one main surface side, and FIG. 5 is a sectional view taken along the line L1-L1 in FIG. 4. A positive electrode 11 illustrated in FIGs. 4 and 5 shows a state before winding. In FIG. 4, for clarifying the configuration of the positive electrode 11, an insulating tape 30 covering a positive electrode tab 19 is indicated by a one dot chain line as a transparent view.

The positive electrode 11 includes a positive electrode current collector 32 and a positive electrode active material layer 34 formed on the positive electrode current collector 32. In the positive electrode 11, an exposed part 32a is formed in which the positive electrode active material layer 34 is not formed and the positive electrode current collector 32 is exposed. One end of the positive electrode tab 19 is connected to the exposed part 32a of the positive electrode current collector 32. As described above, the other end of the positive electrode tab 19 is connected to the filter 22 of the sealing assembly 16 illustrated in FIG. 1. The method of connecting the positive electrode tab 19 and the exposed part 32a is not particularly limited as long as the electrical connection between the positive electrode tab 19 and the positive electrode 11 is secured, and examples of the method include ultrasonic welding.

The exposed part 32a to which the positive electrode tab 19 is connected may be formed at any position in the positive electrode 11, but is generally formed on the central part side in the longitudinal direction of the positive electrode 11.

As illustrated in FIGs. 4 and 5, the insulating tape 30 is attached to the positive electrode 11, included in the electrode assembly 14, so as to cover the exposed part 32a of the positive electrode current collector 32 and the positive electrode tab 19 positioned on the exposed part 32a. By covering the exposed part 32a and the positive electrode tab 19 on the exposed part 32a with the insulating tape 30 in such a manner, for example, the insulation property between the positive electrode 11 and the negative electrode 12 can be improved. As illustrated in FIGs. 4 and 5, the insulating tape 30 may extend to the positive electrode active material layer 34 side so as to cover a boundary between the positive electrode active material layer 34 and the exposed part 32a. By covering the exposed part 32a and the positive electrode tab 19 on the exposed part 32a with the insulating tape 30 and covering a boundary between the positive electrode active material layer 34 and the exposed part 32a with the insulating tape 30 in such a manner, for example, the insulation property between the positive electrode 11 and the negative electrode 12 can be further improved.

FIG. 6 is a partial top view of a winding start of a positive electrode as observed from one main surface side, and FIG. 7 is a sectional view taken along the line L1-L1 in FIG. 6. The positive electrode illustrated in FIGs. 6 and 7 shows a state before winding. In FIG. 6, for clarifying the configuration of a positive electrode 11, an insulating tape 30 is indicated by a one dot chain line as a transparent view.

In a case where a positive electrode active material layer 34 is not formed at the winding start of the positive electrode 11 and an exposed part 32a is formed in which a positive electrode current collector 32 is exposed as illustrated in FIGs. 6 and 7, the insulating tape 30 may be attached to the positive electrode 11, included in the electrode assembly 14, so as to cover a boundary 36 between the exposed part 32a at the winding start of the positive electrode 11 and the positive electrode active material layer 34. By covering the boundary 36 between the positive electrode active material layer 34 and the exposed part 32a with the insulating tape 30 in such a manner, for example, the insulation property between the positive electrode 11 and the negative electrode 12 can be improved.

FIGs. 6 and 7 illustrate a form in which the exposed part 32a is formed at the winding start of the positive electrode 11, but the exposed part 32a is to be formed at an appropriate position depending on, for example, the design of the battery. For example, the exposed part 32a may be formed at the winding end of the positive electrode 11, or may be formed at the central part in the longitudinal direction of the positive electrode 11. In any case, the insulating tape 30 may be attached to the positive electrode 11 so as to cover the boundary 36 between the exposed part 32a in which the positive electrode current collector 32 is exposed and the positive electrode active material layer 34.

Although not illustrated in the drawings, the negative electrode 12 may include a negative electrode current collector and a negative electrode active material layer formed on the negative electrode current collector, and in the same manner as in the positive electrode 11, an exposed part of the negative electrode current collector may be formed. For example, an exposed part may be formed at the winding start of the negative electrode 12. For example, one end of the negative electrode tab 20 is desirably connected to the exposed part at the winding start of the negative electrode 12. As described above, the other end of the negative electrode tab 20 is connected to the bottom of the exterior housing body 15 illustrated in FIG. 1. Examples of the method of connecting the negative electrode tab 20 and the exposed part include ultrasonic welding as in the case of connecting the positive electrode tab 19 and the exposed part.

Alternatively, for example, the exposed part of the negative electrode current collector may be formed at the winding end of the negative electrode 12, or the entire outermost peripheral surface of the electrode assembly 14 may be the exposed part of the negative electrode current collector. Thus, for example, a current path is easily ensured to the exterior housing body 15 through the outermost peripheral surface of the negative electrode 12, and the output characteristics of the battery may be improved.

For example, the insulating tape 30 may be attached to the negative electrode so as to cover a boundary between the exposed part of the negative electrode current collector and the negative electrode active material layer, or may be attached to the negative electrode so as to cover the exposed part and the negative electrode tab 20 on the exposed part.

Hereinafter, the configuration and the like of the insulating tape 30 will be described.

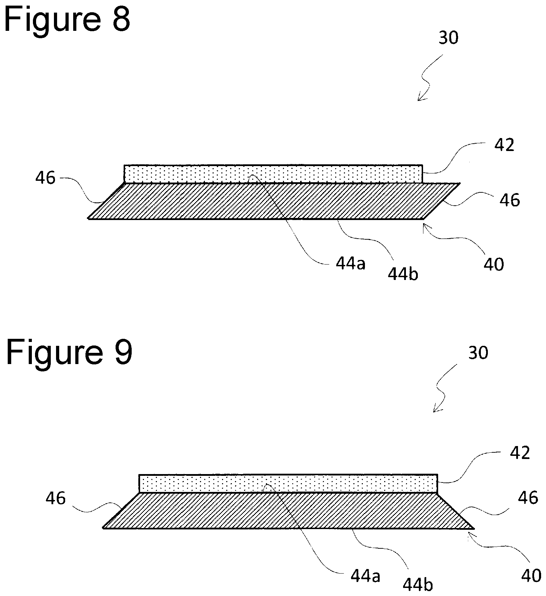

FIG. 8 is a sectional view illustrating an example of an insulating tape used in the present embodiment, and FIG. 9 is a sectional view illustrating another example of an insulating tape used in the present embodiment. As illustrated in FIGs. 8 and 9, the insulating tape 30 includes a base material layer 40 and an adhesive layer 42 provided on the base material layer 40. The adhesive layer 42 serves as a bonding surface with the electrode assembly 14.

A material included in the base material layer 40 is preferably a polymer material, for example, from the viewpoint of flexibility, strength, and the like of the insulating tape 30, and examples of the material include cellulose derivatives (such as cellulose ethers and cellulose esters), polyvinyl chloride, polyolefins (such as polyethylene and polypropylene), polystyrene, polyesters (such as polyethylene terephthalate), polyimides, polyamides, polyamideimides, polycarbonate, and polyphenylene sulfide. Among them, polyimides and wholly aromatic polyamides (aramids) are preferable, and polyimides are particularly preferable. The base material layer 40 may contain inorganic particles dispersed in a polymer material. The base material layer 40 may have a multilayer structure, and can have, for example, a layer containing inorganic particles and a layer containing only a polymer material. The thickness of the base material layer 40 is, for example, greater than or equal to 1 µm and less than or equal to 250 µm, and may be greater than or equal to 3 µm and less than or equal to 180 µm.

The base material layer 40 has main surfaces (44a and 44b) and a side surface 46. The main surfaces are a pair of surfaces including the surface 44a on which the adhesive layer 42 is disposed and the surface 44b opposite from the surface 44a. The side surface 46 is a surface extending from an edge of the surface 44a as one main surface to an edge of the surface 44b as the other main surface, and is not vertical and is inclined with respect to the main surfaces (44a and 44b). The inclination angle of the side surface 46 of the base material layer 40 is preferably in a range of greater than or equal to 40° and less than or equal to 80° or in a range of greater than or equal to 100° and less than or equal to 140° with respect to the main surfaces (44a and 44b), for example, from the viewpoints of effectively suppressing damage to the electrode assembly 14, and the like. Among the side surfaces 46 of the base material layer 40, opposing side surfaces may be inclined in the same direction as illustrated in FIG. 8, or may be inclined in different directions as illustrated in FIG. 9. It is unnecessary that all of the side surfaces are not vertical and are inclined with respect to the main surface, and at least one side surface is to be not vertical and be inclined with respect to the main surface. The thickness of the base material layer 40 is, for example, greater than or equal to 1 µm and less than or equal to 125 µm, and may be greater than or equal to 2 µm and less than or equal to 125 µm.

As described above, If the electrode assembly 14 repeatedly expands and contracts due to repeated charging and discharging, the electrode assembly 14 repeatedly receives a pressure from the exterior housing body 15. If a pressure is repeatedly applied from the exterior housing body 15, a stress is applied to the insulating tape 30 attached to the electrode assembly 14, and since the side surface 46 of the base material layer 40 is not vertical and is inclined with respect to the main surfaces (44a and 44b), a shearing force generated on the side surface 46 of the base material layer 40 is relaxed as compared with a case where the side surface 46 of the base material layer 40 is vertical with respect to the main surfaces (44a and 44b). As a result, damage to the electrode assembly 14 (substantially, the positive electrode 11, the negative electrode 12, or the separator 13) is suppressed at a position to which the insulating tape 30 is attached.

A material included in the adhesive layer 42 is not particularly limited as long as it is a material capable of ensuring bonding between the insulating tape 30 and the electrode assembly 14, and examples of the material include an acrylic resin, natural rubber, synthetic rubber, silicone, epoxy resins, a melamine resin, and a phenol resin. These may be used singly or in combination of two or more kinds thereof. Materials included in the adhesive layer 42 may include, in addition to a resin material, additives such as a tackifier, a crosslinker, an aging inhibitor, a colorant, an antioxidant, a chain transfer agent, a plasticizer, a softener, a surfactant, and an anti-static agent, and a solvent as necessary. The thickness of the adhesive layer 42 is, for example, greater than or equal to 1 µm and less than or equal to 125 µm, and may be greater than or equal to 2 µm and less than or equal to 125 µm.

Hereinafter, materials and the like will be described that are used in the positive electrode 11, the negative electrode 12, the separator 13, and the non-aqueous electrolyte.

As the positive electrode current collector 32 included in the positive electrode 11, a foil of a metal, such as aluminum, that is stable in a potential range of the positive electrode 11, a film in which the metal is disposed on its surface layer, or the like is used. The positive electrode active material layer 34 included in the positive electrode 11 includes a positive electrode active material. The positive electrode active material layer 34 preferably includes a conductive agent and a binder in addition to the positive electrode active material. The positive electrode 11 can be produced by, for example, applying a positive electrode mixture slurry including a positive electrode active material, a binder, a conductive agent, and the like to the positive electrode current collector 32, drying the applied slurry to form a positive electrode active material layer 34, and then rolling the positive electrode active material layer 34. The exposed part 32a of the positive electrode current collector 32 is formed by, for example, intermittent coating in which a part of the positive electrode current collector 32 is not coated with the positive electrode mixture slurry.

Examples of the positive electrode active material include Li composite oxides containing lithium (Li) and a transition metal element such as cobalt (Co), manganese (Mn), or nickel (Ni). The Li composite oxide may include an additional element other than Co, Mn, and Ni, and for example, may include aluminum (Al), zirconium (Zr), boron (B), magnesium (Mg), scandium (Sc), yttrium (Y), titanium (Ti), iron (Fe), copper (Cu), zinc (Zn), chromium (Cr), lead (Pb), tin (Sn), sodium (Na), potassium (K), barium (Ba), strontium (Sr), calcium (Ca), tungsten (W), molybdenum (Mo), niobium (Nb), and silicon (Si).

Examples of the conductive agent included in the positive electrode active material layer 34 include carbon powders such as carbon black, acetylene black, Ketjen black, and graphite. These may be used singly or in combination of two or more kinds thereof.

Examples of the binder included in the positive electrode active material layer 34 include fluorine-based resins such as polytetrafluoroethylene (PTFE) and polyvinylidene fluoride (PVdF), polyacrylonitrile (PAN), polyimides (PIs), acrylic resins, polyolefin-based resins, carboxymethylcelluloses (CMCs) and salts thereof, and polyethylene oxide (PEO). These may be used singly or in combination of two or more kinds thereof.

As the negative electrode current collector included in the negative electrode 12, for example, a foil of a metal such as copper, or a film in which the metal is disposed on its surface layer is used. The negative electrode active material layer included in the negative electrode 12 includes, for example, a negative electrode active material. The negative electrode active material layer may include a binder and the like in addition to the negative electrode active material. The negative electrode 12 can be produced by, for example, applying a negative electrode mixture slurry including a negative electrode active material, a binder, and the like to a negative electrode current collector, drying the applied slurry to form a negative electrode mixture slurry layer, and then rolling the negative electrode mixture slurry layer. An exposed part of the negative electrode current collector is formed by, for example, intermittent coating in which a part of the negative electrode current collector is not coated with the negative electrode mixture slurry.

Examples of the negative electrode active material include carbon materials capable of occluding and releasing lithium ions, such as graphite, non-graphitizable carbon, graphitizable carbon, fibrous carbon, coke, and carbon black. Furthermore, examples of the negative electrode active material that is a non-carbon-based material include silicon, tin, and alloys and oxides mainly containing such a material.

As the binder included in the negative electrode active material layer, the same material as in the case of the positive electrode 11 may be used, or a styrene-butadiene copolymer (SBR), or its modified product or the like may be used. These may be used singly or in combination of two or more kinds thereof.

As the separator 13, for example, a porous sheet having an ion permeation property and an insulation property is used. Specific examples of the porous sheet include fine porous films, woven fabrics, and nonwoven fabrics. As a material of the separator 13, olefin-based resins such as polyethylene and polypropylene, cellulose, and the like are suitable. The separator 13 may be a stacked body having a cellulose fiber layer and a thermoplastic resin fiber layer such as an olefin-based resin. The separator 13 may be a multilayer separator including a polyethylene layer and a polypropylene layer, and a separator 13 may be used that has a surface to which a material such as an aramid-based resin or a ceramic is applied.

The non-aqueous electrolyte includes a non-aqueous solvent (organic solvent) and an electrolyte salt. Examples of the non-aqueous solvent include carbonates, lactones, ethers, ketones, and esters. These solvents may be used singly or in combination of two or more kinds thereof. In a case where two or more solvents are mixed and used, a mixed solvent containing a cyclic carbonate and a chain carbonate is preferably used. Examples of the cyclic carbonate include ethylene carbonate (EC), propylene carbonate (PC), and butylene carbonate (BC). Examples of the chain carbonate include dimethyl carbonate (DMC), ethyl methyl carbonate (EMC), and diethyl carbonate (DEC). Examples of the electrolyte salt include LiPF₆, LiBF₄, LiCF₃SO₃, and mixtures thereof. The amount of the electrolyte salt dissolved in the non-aqueous solvent can be, for example, 0.5 to 2.0 mol/L.

### REFERENCE SIGNS LIST

- 10: Non-aqueous electrolyte secondary battery
- 11: Positive electrode
- 12: Negative electrode
- 13: Separator
- 14: Electrode assembly
- 14a: Winding end
- 15: Exterior housing body
- 16: Sealing assembly
- 17, 18: Insulating plate
- 19: Positive electrode tab
- 20: Negative electrode tab
- 21: Grooved part
- 22: Filter
- 23: Lower vent member
- 24: Insulating member
- 25: Upper vent member
- 26: Cap
- 26a: Opening
- 27: Gasket
- 30: Insulating tape
- 32: Positive electrode current collector
- 32a: Exposed part
- 34: Positive electrode active material layer
- 36: Boundary
- 40: Base material layer
- 42: Adhesive layer
- 44a, 44b: Main surface
- 46: Side surface

## Claims

1. A non-aqueous electrolyte secondary battery comprising:
an exterior housing body;
a wound electrode assembly housed in the exterior housing body, the wound electrode assembly including a positive electrode, a negative electrode, and a separator, the positive electrode and the negative electrode that are wound with the separator interposed between the positive electrode and the negative electrode; and
an insulating tape attached to the wound electrode assembly,
the insulating tape including a base material layer and an adhesive layer provided on a main surface of the base material layer,
the base material layer having a side surface that is not vertical and is inclined with respect to the main surface.

2. The non-aqueous electrolyte secondary battery according to claim 1, wherein the insulating tape is attached so as to fix a winding end of the wound electrode assembly to the wound electrode assembly.

3. The non-aqueous electrolyte secondary battery according to claim 1 or 2, wherein
at least one of the positive electrode and the negative electrode includes a current collector and an active material layer formed on the current collector and has an exposed part in which the active material layer is not formed and the current collector is exposed, an electrode tab is connected to the exposed part, and
the insulating tape is attached so as to cover the exposed part and the electrode tab on the exposed part.

4. The non-aqueous electrolyte secondary battery according to any one of claims 1 to 3, wherein
at least one of the positive electrode and the negative electrode includes a current collector and an active material layer formed on the current collector and has an exposed part in which the active material layer is not formed and the current collector is exposed, and
the insulating tape is attached so as to cover a boundary between the exposed part and the active material layer.
